# EUROPEAN PATENT SPECIFICATION

(11) **EP 3 546 926 B1**
(45) Date of publication and mention of the grant of the patent: **11.05.2022**
(21) Application number: 18164743.9
(22) Date of filing: 28.03.2018
(51) Int. Cl.: G01N 21/64, G01T 1/16, G06N 3/02, G06N 3/04, G06N 3/08

(54) **METHOD AND DEVICE FOR DETERMINING PHOTON ARRIVAL TIMES BY MEANS OF MACHINE LEARNING**
VERFAHREN UND VORRICHTUNG ZUR BESTIMMUNG VON PHOTONENANKUNFTSZEITEN DURCH MASCHINENLERNEN
PROCÉDÉ ET DISPOSITIF DE DÉTERMINATION DE TEMPS D'ARRIVÉE DE PHOTONS AU MOYEN D'APPRENTISSAGE MACHINE

(43) Date of publication of application: 02.10.2019
(73) Proprietor: PicoQuant Innovations GmbH, 12489 Berlin (DE)
(72) Inventor: WAHL, Michael, 12587 Berlin (DE); RAHN, Hans-Jürgen, 12527 Berlin (DE)
(74) Representative: Schulz Junghans Patentanwälte PartGmbB

(56) References cited:
- WO-A1-2006/029475
- WO-A1-2010/070111
- J-D LEROUX ET AL: "Time Discrimination Techniques Using Artificial Neural Networks for Positron Emission Tomography", IEEE TRANSACTIONS ON NUCLEAR SCIENCE, IEEE SERVICE CENTER, NEW YORK, NY, US, vol. 56, no. 3, 1 June 2009 (2009-06-01), pages 588-595, XP011262609, ISSN: 0018-9499
- STOYANOV D V ET AL: "Measuring the arrival times of overlapped photo-events", NUCLEAR INSTRUMENTS & METHODS IN PHYSICS RESEARCH. SECTION A, ELSEVIER BV * NORTH-HOLLAND, NL, vol. 449, no. 3, 21 July 2000 (2000-07-21) , pages 555-567, XP004213555, ISSN: 0168-9002, DOI: 10.1016/S0168-9002(00)00150-9

## Description

### Specification

The invention relates to a method and a computer program for determining photon arrival times from an electric output signal of a photon detector as well as to a system for determining photon arrival times.

In the state of the art time-correlated single-photon counting (TCSPC) applications are well established. The TCSPC applications for fluorescence lifetime measurements typically involve a pulsed excitation source and a detector that is capable of detecting single photons. However, there are also TCSPC applications that exploit a continuous light source, for example in anti-bunching experiments correlating the outputs of two detectors. A variety of single-photon detectors is known, such as for example single-photon avalanche diodes (SPADs), photomultiplier tubes (PMTs), hybrid photon detectors (HPD), or superconducting nanowire single-photon detectors (SNSPD). These detectors provide a comparably high sensitivity for single photons, exhibit reasonable dead times and temporal resolution.

However, with increasing photon count rates the inter-photon distance, i.e. the temporal spacing between two subsequently arriving photons, decreases.

Therefore, if the detector design permits, the probability that two photons are detected within a very short time interval, particularly within the temporal or pulse pair resolution of the photon detector, increases. As each detected photon generates a signal fluctuation in the analog electric output signal from the photon detector, the signal fluctuations of the electric output signal start to overlap and to pile-up, i.e. the electrical voltages of the signal fluctuations add up to an electrical signal that is the superposition of multiple single-photon responses of the photon detector. Depending on the temporal proximity of e.g. two single-photon responses this can result in a signal amplitude of the electric output signal of approximately twice that of a single-photon response or less.

The situation when signal fluctuations due to photon detection events start to overlap such that the voltage of the electrical signal increases above a single-photon detection event is referred to as "pulse pile-up" in TCSPC applications. This pulse pile-up effect in turn can be problematic for the interpretation of the measurement data as the detection electronics of a conventional TCSPC setup do not discriminate between electrical pulses exhibiting different amplitudes, i.e. conventional TCSPC electronics are unable to distinguish these events from single-photon events.

In order to avoid pulse pile-up and dead-time effects, TCSPC measurements are typically performed at count rates that are well below the excitation rate (~ 1% of the excitation rate).

However, a low count rate translates to a longer measurement time, which in many applications is undesirable. This holds particularly true for fast fluorescence lifetime imaging (FLIM) measurements on scanning microscopes or fast (online) monitoring of fluorescence lifetimes in spectroscopy and applications that require particularly short measurement times like live cell imaging or flow cytometry.

On the other hand, photon-number-resolving detectors that can provide an electric output signal whose amplitude accounts for coinciding detection of photons are of no use in conventional TCSPC setups, as conventional TCSPC electronics are not configured to distinguish detection signal amplitudes quantitatively.

For most TCSPC applications, however, it would be advantageous to capture the true number of detected photons with their correct timing properties, reduce measurement time and have a real-time processing capability.

The paper: D. LEROUX ET AL.: "Time Discrimination Techniques Using Artificial Neural Networks for Positron Emission Tomography",IEEE TRANSACTIONS ON NUCLEAR SCIENCE, vol. 56, no. 3, June 2009 (2009-06), pages 588-595, discloses an Artificial Neural Network trained to determine a time of event detection from the signal of a photodetector.

J

An object of the present invention is to provide a method and a system that is capable of real-time processing of electric detector output signals affected by pulse pile-up.

The object is achieved by the method having the features of claim 1.

Advantageous embodiments are described in the subclaims.

A method for determining photon arrival times particularly in real time from an electric output signal of a photon detector, particularly from a photon-number resolving (PNR) detector, comprises the steps of:
a) Acquiring an analog electric output signal from a photon detector, particularly a photon-number resolving detector, wherein the electric output signal comprises signal fluctuations in response to photon detection events;
b) Sampling the electric output signal with a predefined sampling rate, such that a plurality of discrete signal values, particularly in form of a stream, is generated from the electric output signal, particularly wherein each signal value is associated to a sampling time, particularly wherein the plurality of discrete values has a dynamic range of up to 20 bits, particularly wherein the sampling rate is in the order of GHz;
c) Determining a number of photon detection events and a photon arrival time associated to each photon detection event for a finite sequence of a predefined number of discrete signal values of the plurality of discrete signal values by providing the sequence of the discrete signal values to a machine learning method that is configured and particularly trained to determine the number of photon detection events and their associated photon arrival times from the sequence of the discrete signal values, particularly including the case when the photon detection events coincide or are so closely spaced in time that signal fluctuations of corresponding single photon detection events of the photon detector overlap and/or merge, particularly wherein the machine learning method is implemented in hardware, particularly such that it is executable in real-time.

The electric output signal can be acquired directly from the photon detector that records incident photons. The electric output signal can be adjusted, pre-filtered, filtered, or amplified prior to or after any the abovelisted processing steps.

The electric output signal can be understood as a time-varying voltage at the output of the photon detector, i.e. the electric output signal is particularly a time-continuous signal.

The photon detector is configured to detect single photons and generate a signal fluctuation, e.g. a voltage fluctuation of the electric output signal for each detected photon. The generation of said signal fluctuation is temporally related to the detection of the photon at the photon detector, particularly to the arrival time of the photon at the detector. The detection of a photon at the photon detector is referred to as a photon detection event.

Therefore, each photon detection event generates an electric signal fluctuation of the electric output signal of the photon detector. Particularly when there are no photons detected, the output signal remains at some idle value, for example 0.

The photon detector is particularly configured for detection of photons having a wavelength between 100 nm and 3000 nm. Accordingly the photons particularly have a wavelength between 100 nm and 3000 nm.

The photons are particularly photons originating from a luminescent, fluorescent or phosphorescent process. Thus the photon detection events particularly relate to such a process.

The signal fluctuation occurring upon a photon detection has a finite duration and is characterized by a brief change of the signal magnitude, particularly with a duration in the order of a few hundred picoseconds to nanoseconds, particularly in the order of one nanosecond. The signal fluctuation can also be understood as a short electric pulse.

Furthermore, the detector is particularly configured such that a multi-photon response is characterized by signal fluctuations approximately equal to the linear superposition of the corresponding single photon responses.

A multi-photon response particularly refers to the electric signal fluctuation that is generated by a plurality of photon detection events that are temporally spaced below the temporal resolution or below the pulse pair resolution of the photon detector. The acquisition of the electric output signal particularly comprises an adjusting, a prefiltering, filtering and/or an amplifying step.

The particularly filtered electric output signal is digitized in a sampling step where the particularly filtered electric output signal is sampled with a sampling rate, particularly such that a stream of discrete signal values, also referred to as samples, is generated from the particularly filtered electric output signal, particularly wherein each discrete signal value is associated to a well-defined sampling time, particularly wherein the discrete values have a dynamic range of up to 16 bits or 20 bits, while the sampling rate is in the range of 200 MHz to 5 GHz or higher.

The predefined sampling rate should at least fulfill the Nyquist criterion so that aliasing is avoided and no information is lost during the digitization step.

Sampling is particularly facilitated by an analog to digital converter (ADC).

The sampling rate is particularly predefined by the capabilities of the specific ADC that is used for digitization, wherein the specific ADC is for example chosen according to the Nyquist criterion applied to the electric output signal to be sampled. The digitized signal fluctuations can be processed by digital electronics.

According to the invention, a number of photon detection events and a photon arrival time for each photon detection event for the sequence of the particularly consecutive discrete signal values is estimated by providing the sequence of the discrete signal values to a machine learning method that is configured and particularly trained to determine the number of photon detection events and their associated photon arrival times from the sequence of the discrete signal values.

The estimation of a number of photon detection events and their associated photon arrival times with a machine learning method according to the invention allows for the real time processing of the acquired electric output signal of the photon detector, while providing the correct number of photon detection events even for piled-up signal fluctuations.

Methods known in the state of the art such as deconvolution and fitting are not capable of processing and simultaneously resolving the photon number as well as the photon arrival times of piled-up signal fluctuations in real time.

The advantage of the machine learning method over other methods of evaluation is particularly that no knowledge about the detector response and particularly the filter characteristics of a filtering step prior to the sampling step is needed.

The machine learning method is particularly characterized in that it is trained for the estimation of a number of photon detection events and a corresponding number of photon arrival times during a training step, where the machine learning method is trained by providing signal fluctuations with known photon arrival times and known numbers of photon detection events, such that the machine learning method progressively improves estimation performance, without being explicitly programmed. If a trained machine learning method is used, the machine learning method adjusts its estimation capabilities during training particularly until no more improvement in its estimation accuracy is achieved.

The machine learning method particularly comprises a trained classifier and an arrival time estimator or a plurality of trained classifiers and a plurality of arrival time estimators.

The term "machine learning method" as used in the art refers to a method that is particularly configured and adapted to learn a task without being explicitly programmed, or without having an a priori model or knowledge of the task to be learned.

The machine learning method particularly involves a training procedure or a training step wherein during the training step said task is learned via provision of training data from a well-characterized process. The trained machine learning method can use its acquired internal representation of the task and apply it to previously unseen samples of data from the same (or a structurally similar) process.

Particularly due to the distributed processing and structurally enforced generalization of the problem, machine learning methods typically work well even in the presence of noise on the data or some fluctuation in the repeatability of the process producing the data.

The method according to the invention particularly requires the capability to determine particularly a plurality of photon arrival times from a sequence of filtered and sampled signal fluctuations and uses the machine learning method to perform this task. In particular, supervised learning is used to train the machine learning method.

The sequence of discrete signal values is particularly a sequence of temporally adjacent, i.e. chronologically subsequent or consecutive discrete signal values from the filtered and sampled electric output signal.

The sequence comprises particularly a predefined number of discrete signal values.

According to the invention, a plurality of sequences is generated from the electric output signal, each sequence comprising the predefined number of discrete signal values, wherein particularly each sequence is provided to the machine learning method, particularly in a serial manner.

For each sequence provided to the machine learning method, the machine learning method estimates the number of photon detection events comprised in the sequence and the corresponding photon arrival times.

The machine learning method particularly sustains its ability to determine the number of photons, i.e. the number of photon detection events, and the photon arrival times from a sequence even in the case when the photon detection events coincide or are so closely spaced in time that signal fluctuations of corresponding single photon detection events of the photon detector overlap and/or merge.

The machine learning method is particularly implemented such that it processes the sequences and estimates the photon number and photon arrival time for the sequence in real time.

For this purpose the machine learning method is particularly implemented in hardware.

The term "real time" or '"real time processing" particularly relates to the pace-keeping handling of input data, here particularly the sequence of discrete signal values.

A data processing method is considered to be executed in real time if the method processes the input data as fast as new input data are arriving such that no discarding or excessive storing of input data becomes necessary eventually. According to the invention the term real time therefore particularly refers to the situation that for each newly submitted sequence of discrete signal values, the number of photon arrival times and their associated photon arrival times of a preceding sequence is estimated. Therefore, the processing time of a sequence with typical instrumentation is around 25ns.

According to another embodiment of the invention, the determination of the number of photon detection events and the photon arrival time for each photon detection event for the sequence of the discrete signal values is performed in real time.

The goal of real time execution of the method according to the invention is particularly achieved by use of the machine learning method. Time-consuming fitting or deconvolution methods are avoided particularly by trained machine learning methods during operation.

The number of photon detection events is a non-negative integer number.

According to another embodiment of the invention, the machine learning method is implemented in hardware.

According to an embodiment of the invention, the electric output signal is filtered with an analog, particularly linear filter, such that the accordingly filtered signal fluctuations comprised in the filtered electric output signal have a prolonged duration, particularly at least a two times prolonged duration.

This filtering step is particularly applied to the electric output signal after acquisition of the electric output signal and prior to the provision of the electric output signal to the sampling step, i.e. during the sampling step the filtered electric output signal comprising the prolonged signal fluctuations is sampled instead of the non-filtered electric output signal. For the filtering, the acquired electric output signal is fed to an analog, particularly linear filter circuit for filtering the electric output signal such that the accordingly filtered signal fluctuations comprised in the filtered electric output signal have a prolonged duration.

The filtering can be done by an appropriate electric circuit.

Furthermore, the filtering step particularly results in filtered fluctuations that are unambiguously associated to the corresponding (non-filtered) signal fluctuation, i.e. a bijective relation exists between the filtered signal fluctuation and the signal fluctuation before the filtering step.

Such a relation is particularly sustained by a linear filter, but other filters can fulfill this criterion as well.

Therefore, the filtering step can lead to an altered shape, amplitude and duration of the signal fluctuation. However, as long as there is a relation for the filtered signal fluctuation, unequivocally relating the filtered signal fluctuation with the signal fluctuation prior the filtering step, the exact filter characteristics are of secondary relevance. Thus, the exact filter characteristics do not need to be known.

The filtering of the electric output signal is particularly applied in order to condition the signal fluctuations for sampling by a predefined sampling rate according to the Nyquist criterion. The resulting filtered signal fluctuation is prolonged by the filtering step such that it spans across multiple samples, i.e. discrete signal values when the signal fluctuation is digitized in a subsequent sampling step. This helps to convey information on the strength and temporal location of the signal fluctuations into more samples such that losses of information due to a limited sampling rate are avoided. As typical signal fluctuations are within the nanosecond range and state-of-the-art analog-to-digital converters (ADCs) allow sampling rates between 200 MHz and 5 GHz, a signal fluctuation of, for example, 1 ns might not be sampled with such an ADC such that samples for subsequent processing steps are generated in a sufficient number for the determination of the photon arrival times for overlapping signal fluctuations.

Faster ADCs with high sampling rates in the order of several Gigahertz, e.g. 2 GHz or more, suffer several disadvantages such as reduced sampling depth as compared to slower ADCs having sampling rates in the upper Megahertz range, e.g. 100 MHz to 1000 MHz. However, faster ADCs allow for the direct processing of the non-filtered electric output signal, while sampling the electric output signal according to the Nyquist criterion.

On the other hand, the sampling accuracy is usually reduced at high sampling rates when compared to slower ADCs.

While the idea of prolonging a signal fluctuation prior to the estimation of the photon number and photon arrival times seems counter-intuitive, as prolonged signal fluctuations tend to overlap even more than the non-filtered signal fluctuations do, it allows for sampling the electric output signal so that enough samples are generated for processing the electric output signal with a machine learning method.

According to another embodiment of the invention, the filtering is a linear filtering of the photon-detection signal.

According to another embodiment of the invention, the linear filtering comprises or is one of:
- a low-pass filtering with a low-pass filter and/or
- a resonant filtering with a resonator, particularly wherein the resonant filtering has an impulse response of a decaying oscillation.

A low-pass-filtering allows for a linear filtering with a prolonged filtered fluctuation signal. The implementation of an appropriate low-pass filter is comparably simple to achieve. However, in order to obtain a sufficient number of discrete signal values, and particularly fulfilling the Nyquist criterion, from a photon detection event, the filtering and the filter circuit needs a relatively long time constant. This long time constant particularly leads to a comparably poor localization of the filtered signal fluctuation in time and hence to a comparably poor resolution with respect to the estimation of the photon arrival time.

With the resonant filtering a larger part of the photon arrival time information is comprised in the AC component than in the DC component of the filtered signal fluctuation, thereby permitting better localization in time and consequently more accurate arrival time estimation.

According to the invention, the machine learning method a plurality of artificial neural networks.

Artificial neural networks (ANN) are a class of machine learning methods inspired by the biological neural networks that constitute Human or animal brains. An ANN consists of a plurality of simple processing units, the so-called neurons, which communicate by transmitting signals to each other over a large number of weighted connections between the neurons. ANNs are inherently parallel in the sense that many neurons can carry out their computations simultaneously. This makes them very suitable for fast execution on highly parallelized processing hardware such as field programmable gate arrays (FPGA) or vector-processing digital signal processors (DSP).

The method according to the invention can comprise a plurality of ANNs connected in serial or parallel order for estimating the photon number and the photon arrival times from a sequence of the discrete values.

The ANN or each ANN (in case the machine learning method comprises plurality of ANNs), particularly has inputs for a predefined number of discrete signal values that are then processed at once.

Depending on the sampling rate, the number of discrete signal values can be adjusted.

The machine learning method comprising an ANN or a plurality of ANNs can be executed in real time and can be incorporated in suitable hardware.

According to another embodiment of the invention, the machine learning method comprises or is a recurrent neural network (RNN). A recurrent neural network is a class of artificial neural networks. Unlike feedforward neural networks, another class of artificial neural networks, the RNN is particularly well configured to determine the number of photon detection events and their associated photon arrival times from an unsegmented connected time series, such as the discrete signal values from a signal fluctuation. It is particularly not necessary to generate plurality of overlapping sequences.

In the context of the specification, when applicable, the term "artificial neural network" explicitly implies such a recurrent neural network.

According to the invention, the machine learning method comprises a classifier, i.e. a first artificial neural network that is configured and particularly trained to determine the number of photon detection events from the sequence of the discrete signal values, wherein the number of photon detection events is a non-negative or positive integer number N, particularly 0, 1, 2 or 3, wherein the classifier determines the number of photon detection events from the sequence of the discrete signal values and particularly wherein the classifier is also configured and particularly trained to determine whether the sequence of the discrete signal values comprises a number of photon events that is zero or greater than a predefined maximum number Nmax of photon detection events.

This allows for an efficient design of the method and electronically processing the sequence(s) of discrete signal values. The classifier basically can serve for pre-sorting the sequences according to their number of photon detection events. Downstream, i.e. in subsequent processing steps or processing steps that require the result from the classifier, the machine learning method can be configured to determine the corresponding number of photon arrival times of a sequence. A photon arrival time estimation under the constraint of a predefined number of photon arrival times allows for less complex ANNs that can be trained to a better accuracy. Furthermore, this embodiment allows for a modular design of the method. If for example, an improved estimator for the photon arrival times is provided, only the estimator has to be replaced but not the classifier for the photon-number.

The number N of photon detection events can formally be almost arbitrarily high. However, given limited dynamic ranges of the components, such as detectors, and the ADC as well as signal to noise ratio it might not be very useful having N much larger than 3. For the currently known detector types and application scenarios this seems sufficient since the likelihood of photon coincidences with N>3 is very low. The classifier can also be trained to detect whether there is no photon detection event within a provided sequence. In this case no further downstream processing is necessary and can be omitted, such that a resource-efficient processing is facilitated. If the photon number exceeds the maximum number Nmax of photon detection events a marker can be issued such that these sequences can be treated in a different manner and/or be counted for information and more suitable adjustment of the experiment.

According to the invention, the machine learning method comprises a plurality of photon arrival time estimators, i.e. a plurality of artificial neural networks, wherein each photon arrival time estimator is configured and particularly trained to determine a different, particularly non-negative integer number of photon arrival times from the sequence of the discrete signal values, wherein particularly after or in parallel to the estimation of the number N of photon detection events by the classifier, the photon arrival time estimator of the plurality of photon arrival time estimators that is trained for the determination of N photon arrival times as determined by the classifier is provided with the sequence of the discrete signal values and determines N photon arrival times from the sequence of the discrete signal values, wherein the method is particularly implemented as a pipelined process such that the classifier and the photon arrival time estimators effectively operate in parallel.

The term "pipelined process" refers to the mode of data processing within the machine learning method. Particularly while at least one estimator processes a sequence of discrete signal values with a known, i.e. estimated number of photon detection events, the classifier estimates the number of photon detection events for a later sequence, such that when the estimator has processed the actual sequence, the classifier has finished the processing of the later sequence and provides the number of detection events for this later sequence such that the correct estimator can process said later sequence. While this pipelined process is serial it provides quasi parallel computation, due to the simultaneous processing of a plurality of sequences.

Particularly for each positive number of determined photon detection events a different photon arrival time estimator is provided. Each photon arrival time estimator can be implemented conveniently with a separate ANN, particularly wherein each photon arrival time estimator is implemented in a separate hardware component such as an FPGA or a DSP.

This allows for scalability of the method.

According to one embodiment, only the photon arrival time estimator that is configured to determine the estimated number N of photon detection events is provided and activated after the number of detection events has been determined. This embodiment is energy-efficient and reduces the computational load.

According to an alternative embodiment of the invention, the sequence is provided to particularly all photon arrival time estimators and simultaneously the number of photon detection events is estimated, e.g. with the classifier.

Once the classifier has determined the number of photon detection events, the result from the correspondingly configured photon arrival time estimator can be used as an output of the machine learning method and the results from the photon arrival time estimators that are configured to determine a different number of photon arrival times are discarded.

According to another embodiment of the invention, at least 5, 10 or at least 25 discrete signal values are sampled from each particularly filtered signal fluctuation comprised in the particularly filtered electric output signal.

According to another embodiment of the invention, the filtered signal fluctuations are prolonged by the filtering step such that at least 5, 10 or at least 25 discrete signal values are sampled from each filtered signal fluctuation, wherein the filtered signal fluctuations are particularly 10 times, particularly 25 times, more particularly 50 times longer than the signal fluctuations comprised in the electric output signal from the detector.

For example, assuming a signal fluctuation in the electric output signal of the photon detector has a duration of approximately 1 ns, and the digitization is done with a sampling rate of 1 GHz, the filter prolongs the signal fluctuation by a factor of 10 such that the filtered signal fluctuation has an approximate duration of 10 ns. From the filtered signal fluctuation 10 discrete signal values can be generated that provide sufficient information to the machine learning method.

If a lower sampling rate is used, e.g. because a higher sampling depth is desired, the filter of the filtering step can be adapted accordingly such that the signal fluctuation is prolonged accordingly.

In turn, if a higher sampling rate is used, the filter can be designed such that the signal fluctuations are prolonged to a lesser extent.

According to another embodiment of the invention, not more than 100 or 200 signal values are generated from a signal fluctuation.

The filtering and sampling rate have to be adjusted accordingly.

According to another embodiment of the invention, from the plurality of discrete signal values a plurality of particularly adjacent and overlapping sequences comprising a predefined number of adjacent discrete signal values of the plurality of discrete signal values is generated, wherein the number of photon detection events and the photon arrival time for each photon detection event is determined for each sequence of the discrete signal values by the machine learning method.

This allows for a redundant and thus a more precise processing.

The generation and provision of overlapping sequences particularly solves the problem of the limited sequence length. Due to the finite sequence length, the recognition of photon detection events (and/or their associated photon arrival times) that are located on the edge of the sequence might be impaired.

By providing overlapping sequences this problem is solved.

Moreover, using the redundancy of the estimation of the number of photon detection events and the photon arrival times leads to a more accurate estimation.

According to another embodiment of the invention, two adjacent sequences of the plurality of sequences overlap by less than 80%, particularly by 50% of the sequence length.

The sequence length is particularly given by the predefined number of discrete signal values comprised by the sequence.

From the number of discrete signal values in the sequence a duration of the sequence can be derived.

The sequences overlap particularly such that each discrete signal value is comprised in two or more sequences.

For example, the sequences each comprise 50 discrete signal values and overlap by 25 discrete signal values each, thus by 50%.

According to another embodiment of the invention, two or more photon arrival times that are determined by the machine learning method from two or more overlapping sequences of the plurality of sequences and that belong to the same photon detection event that is comprised in each of the overlapping sequences are averaged, wherein the averaged photon arrival time for this photon detection event is provided as the photon arrival time of the photon detection event for further processing, particularly wherein a higher moment such as the variance of the photon arrival times is provided, particularly wherein all photon arrival times that belong to the same detection event are provided.

According to this embodiment, the precision and even an accuracy measure of the estimated photon arrival time can be provided by the method according to the invention.

According to another embodiment of the invention, if the number of photon detection events determined from the sequence of the discrete signal values is zero or greater than a predefined maximum number Nmax for which the machine learning method is configured and particularly trained for, a signal, such as a marker, also referred to as a flag, indicating that no photon arrival times are or can be estimated for this sequence is provided and no photon arrival times are determined by the machine learning method.

The provision of a marker allows for efficient processing, counting and labeling of specific events, such as "no photon" or "more than Nmax photons".

By omitting further processing of such marked sequences, the computational load can be reduced.

According to another embodiment of the invention, the rate of the signals indicating that no photon arrival times are or can be estimated for the sequence is estimated and an information comprising said rate is provided to an operator of the method or the system. The information can be displayed on a display or as an acoustic signal.

Based on this information the operator can adjust the experiment.

According to another embodiment of the invention, the in step c) of claim 1 determined photon arrival times and their associated number of photon detection events are provided for further processing steps, wherein the further processing steps comprise at least one of:
- determining and particularly visualizing a characteristic value of an fluorescence signal, such as the fluorescence intensity;
- determining and particularly visualizing a fluorescence decay histogram or at least one characteristic value of the fluorescence decay histogram, such as one or more decay time constants based on the determined photon arrival times;
- determining and particularly visualizing a fluorescence correlation curve from the photon arrival times;
- determining an inter-photon time distribution;
- calculating photon statistics for the purpose of determining the number of observed photon emitters such as fluorescent molecules, e.g. molecular counting;
- determining photon coincidences; and/or
- determining and particularly visualizing a photon count rate at the photon detector.

A characteristic value is particularly a value that quantifies a physical entity, a physical process and/or that is suited to reduce the information content of a plurality of values, particularly down to a single value. In a scaled embodiment configured to operate on signals from multiple photon detectors the determination and processing of said characteristic values is performed simultaneously on the plurality of electric output signals from the photon detectors and may generate further characteristic values relating to photon detection events on the plurality of photon detectors. During further processing steps, characteristic values, histograms and/or images can be generated faster than in conventional time-correlated single-photon applications, as higher count-rates can be used.

This is particularly advantageous for time-sensitive fluorescence applications, for example in fluorescence imaging or in recording dynamic, time-varying fluorescent processes and samples.

According to another embodiment of the invention, steps a) to c) are performed on a plurality of electric output signals acquired from a plurality of photon detectors, wherein a plurality of photon arrival times and number of photon detection events for each photon detector is estimated by the machine learning method, wherein the photon detectors are particularly arranged in an array of photon detectors.

The problem addressed by the invention is furthermore solved by a computer program comprising computer-readable computer program code configured to execute the method, or at least the computer-executable method steps such as steps b) and c) according to claim 1 of the invention, when executed on a computer.

The problem addressed by the invention is furthermore solved by a computer-readable data carrier having stored thereon the computer program according to the invention.

The problem addressed by the invention is furthermore solved by a system for determining photon arrival times and a number of photon detection events from an electric output signal of a photon detector, particularly wherein the system is configured and arranged for executing the method or the computer program according to the invention, the system comprising at least the following components:
- a light source, such as a laser or a lamp for optically exciting the luminescent sample with excitation light;
- particularly an objective lens for collecting light emitted by a luminescent sample and/or for focussing the excitation light onto the sample;
- particularly an optical filter for filtering excitation light from the luminescent photons emitted by the luminescent sample;
- a photon detector for detecting luminescent photons from the sample, wherein the photon detector is configured to generate an analog electric output signal, wherein the photon detector is particularly a photon-number resolving detector that is connected to
- at least one analog-to-digital-converter (ADC) for sampling the electric output signal with a sampling rate, such that a plurality of discrete signal values is generated from the electric output signal, particularly wherein the analog-to-digital converter has a sampling rate between 200 MHz and 5 GHz, particularly with a dynamic range between 6 bit and 16 bit, and wherein the ADC is connected to
- a processor, such as a field-programmable gate array (FPGA), a digital signal processor (DSP) or a vector-processing unit that is configured for determining a number of photon detection events and an associated photon arrival time for each photon detection event from a sequence of discrete signal values, wherein the processor is configured to perform a machine learning method that is configured and particularly trained to determine the number of photon detection events and the associated photon arrival times of the detection events from the sequence of the discrete signal values, by the methods of the present invention, particularly wherein the processor is configured to determine the photon arrival times in real time.

For the system definitions of terms and expressions given in the context of the method according to the invention apply and vice versa.

The system can comprise additional electric or electronic components such as a filter circuit and/or a signal amplifier for amplifying the electric output signal from the detector.

The signal amplifier is particularly arranged between the photon detector and the ADC, more particularly between the photon detector and the filter circuit. The signal amplifier can be arranged or chosen to implicitly employ its own frequency characteristics as part of or as a replacement of the filter. Thus, the signal amplifier can comprise the filter or vice versa - the filter can comprise the signal amplifier.

The system can comprise a signal splitter in order to provide the electric output signal to a plurality of components of the system.

The term "connected to" refers to a connection between the components that allow the transmission and receiving of signals. The components do not have to be directly connected with each other, but other components can be arranged between them.

A connection between the components is particularly achieved by an electric wire or printed circuit board connection.

The electric output signal of the photon detector is particularly a voltage or a current signal over time generated by the photon detector,- irrespective of whether a photon has been detected or not. Ideally, the electric output signal only varies in time when a photon is detected. These variations are referred to as signal fluctuations. However, photon detector noise and cosmic radiation can lead to signal fluctuations in the electric output signal that are not caused by a photon detection event.

The photon detector is configured to output an electric output signal that encodes with its signal fluctuations the number of photon detection events and their photon arrival times.

Ideally, the signal fluctuation in the electric output signal corresponding to a plurality of photon detection events is a linear combination, particularly a superposition of the signal fluctuations for each single photon detection event comprised in the plurality of photon detection events.

A photon detector with these properties is considered a photon-number-resolving detector.

The photon detector is particularly a point detector that is not capable to spatially resolve detected photons.

The photon detector is particularly an array of point detectors that is configured to generate an electric output signal that encodes with its signal fluctuations the detected photon number for each point detector.

The photon detector particularly generates the signal fluctuations upon detection of one or more photons - in contrast to CCD-cameras, or CMOS-based cameras that are read out at fixed frame rates.

Such photon detectors can be for example superconducting nanowire photon detectors (SNSPD), photomultiplier tubes (PMTs), silicon photomultiplier tubes (Si-PMTs) or hybrid photo detectors (HPD).

The signal fluctuations are typically very short, e.g. a few nanoseconds or even less. In order to sample a sufficient number of discrete signal values from a signal fluctuation when digitizing the signal with an analog-to-digital converter (ADC), the sampling rate of the ADC has to be sufficiently high. The ADC is particularly configured to generate from each signal fluctuation discrete signal values that sample the signal fluctuation according to the Nyquist criterion or better.

The sampling rate of ADCs cannot be arbitrarily high, but is limited. As a rule of thumb, a higher sampling rate comes with a reduced sampling depth, i.e. bit depth, and with an increased inaccuracy in sampling.

If the signal fluctuations are too short for generating a sufficient number and/or quality of discrete signal values, the electric output signal and thus the signal fluctuations can be filtered with an appropriate filter circuit.

The processor can be a computer or a computer-like device, such as elaborated above (FPGA, DSP etc.).

The processor is particularly a processor system, particularly comprising a plurality of computing components such as FPGAs or DSPs.

A processor system with a plurality of computing components can process the sequence of discrete signal values in a parallel fashion.

In the invention, the machine learning method comprises a plurality of classifiers or estimators such as artificial neural networks, so that each computing component can comprise one of the plurality of classifiers or estimators such that the sequences can be processed in a highly parallel manner.

The processor can be configured to provide the estimated photon arrival times and the number of photon detection events to another processor, or a computer for further processing steps based on the estimated photon arrival times and the number of photon detection events.

According to another embodiment of the invention, the system comprises a computer-readable medium, particularly a computer-readable storage medium, comprising instructions, particularly in form of computer program code which, when executed by a computer or the processor of the system, cause the computer or the processor to carry out the method according to the invention or at least the steps of the method that are executable by a computer, such as for example steps b) and/or c) of claim 1.

According to another embodiment of the invention, the system comprises a computer-readable data carrier having stored thereon the computer program according to the invention.

The computer-readable medium or the data carrier can particularly provide the instructions to the processor of the system, so that the processor can carry out the method according to the invention.

According to another embodiment of the invention, the system comprises a filter circuit for filtering the electric output signal such that signal fluctuations comprised in the electric output signal are prolonged by the filter circuit, wherein the filter circuit is arranged between the photon detector and the at least one analog-to-digital converter.

The ADC therefore receives the filtered electric output signal comprising the filtered signal fluctuations for sampling. The filtered electric output signal comprising the filtered signal fluctuations with the prolonged duration is then digitized by the ADC with a sufficient number of samples, i.e. discrete signal values.

The filter circuit is particularly a linear filter circuit such as a low-pass circuit or a resonator circuit, for filtering the electric output signal.

The filter circuit is configured to prolong the signal fluctuations in the electric output signal particularly by a fixed factor.

The suitable filter characteristics of the filter circuit have been elaborated already within the specification.

Prior to or after the filter circuit a signal amplifier can be arranged.

The filter allows for the use ADCs that exhibit slower sampling rates, e.g. in the range of 200 MHz to 2 GHz and that exhibit a higher sampling depth and accuracy as compared to faster ADC that might process an un-filtered electric output signal, i.e. non-prolonged signal fluctuations.

According to another embodiment of the invention, the light source is a pulsed light source such as a pulsed laser, wherein the system comprises an electronic circuit that is configured to associate the determined photon arrival time from the processor with a preceding or a subsequent laser pulse time information, particularly wherein the system comprises a computer-readable storage medium for storing the determined photon arrival time particularly associated with the preceding or subsequent laser pulse time information.

This allows for storing photon detection events with respect to the pulsed light source.

In a subsequent evaluation of the estimated photon arrival times a decay histogram can be generated from the photon arrival times and the laser pulse time information. This embodiment allows for time-correlated photon-number resolved applications to be performed without being prone to measurement artifacts due to high photon count rates.

According to another embodiment of the invention, the system is or comprises a microscope or a spectrometer for time-resolved luminescence, particularly time-resolved fluorescence measurements, particularly with real-time evaluation of the incident photons.

According to another embodiment of the invention, the system comprises a plurality of photon detectors, wherein the electric output signal of each photon detector is processed by the machine learning method according to the invention and a plurality of photon arrival times and number of photon detection events is estimated for each detector by the machine learning method, i.e. particularly for each electric output signal a machine learning method according to the invention is provided.

The photon detectors can be arranged and configured to distinguish between different physical properties of the incident photons such as polarization, wavelength. Furthermore, the photon detectors can be arranged such that they probe for different spatial origin of the photons, i.e. they are configured to provide a spatial information about the detected photon in relation to photons detected by another photon detector of the plurality of photon detectors.

According to another embodiment of the invention, the plurality of photon detectors is arranged in a row or in an array, particularly wherein the array is arranged and configured to record 2D-images.

This disclosure relates to another aspect not covered by the claims, namely a process for training a machine learning method for determining photon arrival times from an electric output signal of a photon detector, particularly a machine learning method as used in step c) of the method according to the invention, comprising the steps of:
i) exposing a photon detector to light such that the likelihood of acquiring an analog electric output signal comprising signal fluctuations corresponding to more than one photon detection event within a pulse pair resolving time interval of the photon detector lies below a predefined probability, wherein the probability is particularly below 5%, more particularly below 2%, more particularly below 1%, more particularly below 0.5%;
ii) acquiring or recording the electric output signal comprising the signal fluctuations, particularly according to step a) of claim 1;
iii) filtering the electric output signal with an analog, particularly linear filter particularly according to claim 2, such that the accordingly filtered signal fluctuations comprised in the filtered electric output signal have a prolonged duration;
iv) sampling the filtered electric output signal with a sampling rate, such that a plurality of discrete signal values is generated from the filtered electric output signal, particularly according to step b) of claim 1;
v) generating a plurality of sequences comprising a predefined number of discrete signal values, particularly wherein the plurality of sequences is adjusted by excluding all sequences from said plurality of sequences that comprise more than a single photon detection event such that only sequences comprising single photon events are processed further;
vi) estimating for each signal fluctuation a single photon arrival time, wherein the single photon arrival time is associated to the corresponding signal fluctuation;
vii) providing the particularly adjusted plurality of sequences and the corresponding estimated single photon arrival times as training data to a machine learning method and train the machine learning method for the case of signal fluctuations comprising a single photon detection event only, particularly wherein the machine learning method is a machine learning method according to step c) of claim 1;
viii) generating a plurality of sums comprising or consisting of a superposition of a predefined number of particularly adjusted sequences of discrete signal values, particularly randomly chosen from the plurality of sequences, and associating each sum with the associated single photon arrival times and the resulting number of photon detection events comprised in each sum;
ix) providing each sum, the associated number of photon detection events, and the associated photon arrival times to the machine learning method and train the machine learning method for the determination of the predefined number of photon detection events and/or for the determination of the photon arrival time for each photon detection event of the respective sum.

A sum in the context of sums of sequences yields a summed sequence with the same number of predefined discrete signal values as each sequence.

The sum is therefore not a scalar value but reflects a possible signal fluctuation generated by a plurality of detection events.

The process is therefore well suited to train a machine learning method so as to be capable to process the sequences provided by the method according to the invention according to claim 1, step c).

The training of machine learning methods with appropriate data sets is well-known in the art.

According to another example of the process disclosed herein, the light is pulsed deterministically, wherein in step vi) of the process the single photon arrival time of the signal fluctuation is determined, e.g. calculated from a predefined and particularly known temporal relation of the light pulses and the signal fluctuations or filtered signal fluctuations or the particularly adjusted sequence of discrete values, particularly wherein the temporal relation is provided by means of a common clock for the light source and sampling step iv).

This example allows for the calculation of the photon arrival times as opposed to an estimation or a measurement of the photon arrival times with a common TCSPC electronics, which can be more accurate.

The specific temporal relation can be achieved with a programmable delay or a phase locked loop circuit.

According to another example, the temporal relation is a dynamic relation that varies in a deterministic manner over time.

According to another example, in step vi) the single photon arrival time for each signal fluctuation is determined by means of a single-photon time tagging circuit that is synchronized to the sampling clock used for sampling the electric output signal in the sampling step iv).

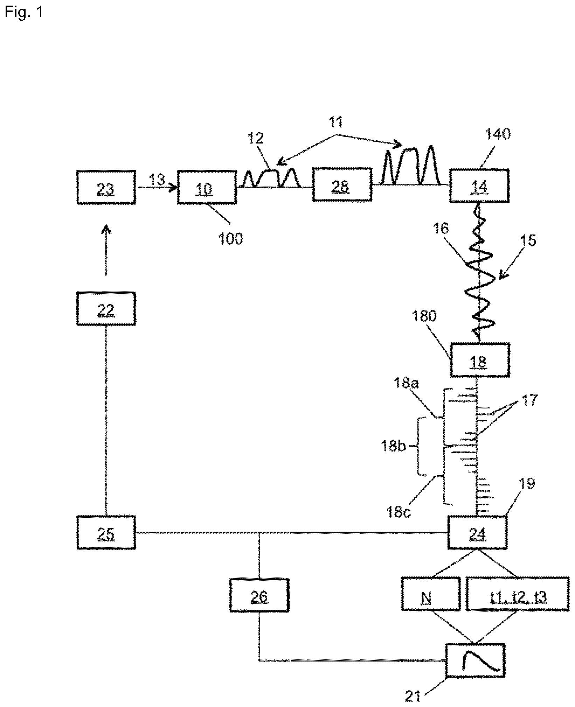

In the following, the invention is explained by means of exemplary embodiments and a figure description. Features in the embodiments can be combined in any technical meaningful way and are particularly not restricted to a specific embodiment.
It is shown in Fig. 1 a schematic picture of a method and a system basing the invention;
Fig. 2 drawings of the filtering and sampling of an electric output signal;
Fig. 3 a drawing of the processing of a sequence comprising discrete signal values by an artificial neural network; and
Fig. 4 a processing of a sequence by a plurality of artificial neural networks as in the present invention.

Fig. 1 schematically shows a method and a system basing the invention.

A sample 23 is excited by a light source 22 such as a pulsed laser. The photons emitted from the excited sample are detected by a photon detector 10. The photon detector 10 generates 100 an electric output signal 11, wherein the electric output signal 11 comprises a signal fluctuation 12 for each photon detection event 13, i.e. for each detected photon. The electric output signal 11 is an analog voltage or a current signal. The electric output signal 11 is provided to a signal amplifier 28 that amplifies the electric output signal 11. The amplified electric output signal 11 is then provided to a linear resonant filter circuit 14 that filters 140 the electric output signal 11 such that the filtered signal fluctuations 16 are prolonged.

The filtered electric output signal 15 with the filtered signal fluctuations 16 is then sampled 180 by an ADC 18 such that a plurality of discrete signal values 17 is generated, digitizing the filtered electric output signal 15, such that a stream of discrete signal values 17 is obtained.

In a next step, the stream of discrete signal values 17 is segmented and rearranged to a plurality of consecutive and overlapping sequences 18a, 18b, 18c. Each sequence 18a, 18b, 18c comprises a predefined number of discrete signal values 17, here, fifteen (less discrete signal values are drawn in the Figure). The sequences 18a, 18b, 18c are overlapping by 50%, i.e. they comprise partially the same discrete signal values 17 - when overlapping by 50%, two consecutive sequences 18a, 18b, 18c have 50% of identical discrete values 17, i.e. each discrete signal value 17 of the stream of signal values 17 is comprised in two sequences 18a, 18b, 18c.

Each sequence 18a, 18b, 18c is provided to a machine learning method 19 executed by the processor 24, wherein the machine learning method 19 is configured and trained for the estimation of the number N of photon detection events 13 comprised in each sequence 18a, 18b, 18c and the photon arrival times t1, t2, t3 for each of the photon detection event 13 comprised in the sequence 18a, 18b, 18c.

The machine learning method 19 outputs the estimated number N of photon detection events 13 in each sequence 18a, 18b, 18c and the associated photon arrival times t1, t2, t3 for further processing steps 21, such as for determining a decay histogram of the detected photons. In order to generate the decay histogram, an electric circuit 25 provides a timing information of the laser pulses such that a photon detection event can be associated to a laser pulse.

The photon arrival times t1, t2, t3 and the laser pulse time information can be stored on a computer-readable memory 26.

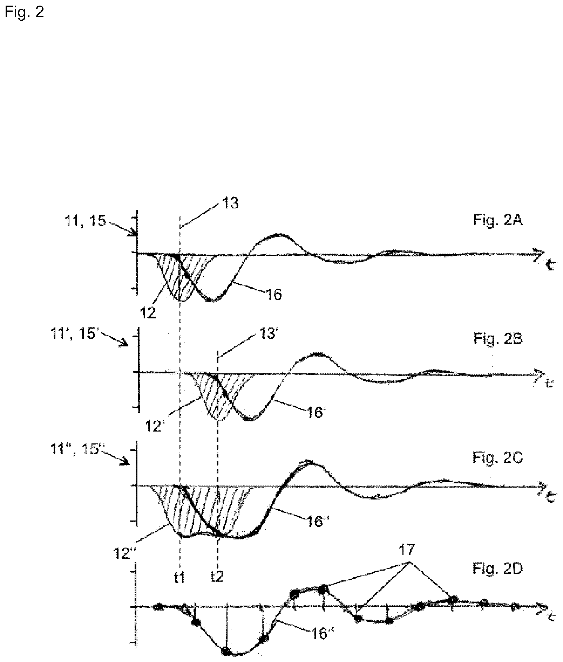

Fig. 2a to Fig. 2c schematically show the temporal waveform of an analog electric output signal 11, 11', 11" of the photon detector 10. Time is plotted along the horizontal axis, and the electric output signal 11, 11', 11" is plotted along the vertical axis in units of Volt. The time axes of Fig. 2a to Fig 2d are identical and synchronous, i.e. they are not shifted in time or differently scaled with respect to each other.

In Fig. 2a and Fig. 2b the case is shown when a single photon is detected at a time t1 or t2 respectively by the photon detector 10, i.e. the electric output signal 11, 11' comprises a signal fluctuation 12, 12' that corresponds to a single photon detection event 13, 13'.

Fig. 2c shows the linearly superimposed electric output signals 11, 11' of Fig. 2a and Fig. 2b that would correspond to two photon detection events 13, 13' with the photon arrival times t1 and t2 consisting of the photon detection events 13, 13" depicted in Fig. 2a and Fig. 2b. The resulting signal fluctuation 12" in Fig. 2c is not resolved by the detector 10b and would be counted as a single photon detection event with conventional TCSPC electronics.

The signal fluctuations 12, 12', 12" in Fig. 1a to Fig. 2c are depicted as a pulse with a hatched area.

In the depicted example each signal fluctuation 12, 12', 12" is a negative voltage pulse temporarily changing the voltage of the electric output signal 11, 11', 11" from zero Volt to a negative voltage (the units on the vertical axes are solely arbitrary values).

The electric output signal 11, 11', 11" and thus the signal fluctuation 12, 12', 12" is subsequently filtered 140 with a linear resonator 14, i.e. the electric output signal 11, 11', 11" is provided to the input of a resonant filter 14 with a fixed resonance frequency. The effect and output of the filtering 140 is shown as a solid, continuous oscillating line that schematically depicts the filtered signal fluctuation 16, 16', 16" respectively. The filtered electric output signal is still analog and oscillates between a negative and a positive voltage until it decays to zero (the units on the vertical axes are solely arbitrary values).

The filtered signal fluctuations 16,16', 16" are prolonged in time, i.e. the signal fluctuates for a longer time, i.e. the signal levels to zero Volt later than the original (non-filtered) signal fluctuation 12, 12', 12". It is noted that the shapes of the filtered fluctuations 16, 16', 16" are altered.

It is further noted that the exact filter characteristic of the resonant filter 14 does not need be known, as long as it does not change over time and as long as it provides a bijective relation between the non-filtered signal fluctuations 12, 12', 12" and the filtered fluctuations 16, 16', 16".

In a next step that is shown in Fig. 2d the filtered electric output signal 11" and thus the filtered signal fluctuation 16" of Fig. 2c is sampled 180 with an ADC 18 with a predefined and fixed sampling rate (indicated by the equidistant vertical lines connecting the dots on the continuous line depicting the filtered signal fluctuation 16"). Each sample is a discrete signal value 17 indicated as a dot.

The plurality of discrete signal values 17 can now be provided to a trained machine learning method 19 in order to estimate the number N of photon detection events 13, 13' comprised in the depicted signal fluctuation 16" and the corresponding photon arrival times t1 and t2.

It can be seen that if the non-filtered signal fluctuation 12, 12', 12" were provided to the ADC 18 for sampling 180, only two or three sampling values could be generated covering the entire signal fluctuation 12". It would be difficult, if not impossible to determine with a machine learning method the number N of photon detection events 13, 13" and their photon arrival times t1, t2 from only two or three samples, as due to the low number of samples information regarding the signal fluctuation 12" is lost and cannot be recovered unambiguously.

The method and the system according to the invention solve this problem particularly by prolonging the signal fluctuations 12, 12', 12".

Employing a suitable machine learning method 19 allowing a highly parallelized implementation of the method, it becomes possible to perform the method in real time, as no time-consuming fitting or deconvolution algorithms have to be executed.

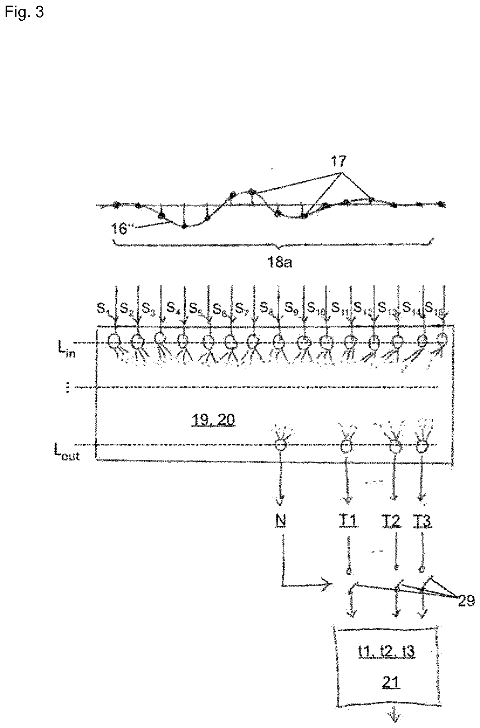

In Fig. 3 the processing of a sequence 18a comprising a predefined number here fifteen, of discrete signal values 17 of the sampled electric output signal comprising a plurality of discrete signal values 17 is demonstrated. The discrete signal values 17 are arranged chronologically in the sequence, i.e. they are ordered consecutively according to the corresponding time associated to the respective discrete signal value 17. However, this is not mandatory. It is only mandatory that the discrete signal values 17 in the sequence 18a are arranged in predefined fixed fashion. For sake of simplicity here the discrete signal values 17 are chronologically and consecutively ordered.

The sequence 18a comprising fifteen discrete signal values 17 is shown on the top panel of Fig. 3.

The discrete signal values 17 are indicated by dots of different height with respect to the time axis (depicted as a horizontal line). The original filtered signal fluctuation 16" is depicted as a continuous line connecting the discrete signal values 17.

It is noted that the sequence 18a does not necessarily comprise all discrete signal values 17 of a sampled signal fluctuation but solely a predefined number of signal values 17 - the latter case is even the more common case. In any case the machine learning method 19 is configured and trained to determine a number N of photon detection events 13, 13' and the corresponding photon arrival times t1, t2. This is done for each sequence 18a, 18b, 18c that is provided to the machine learning method 19.

In order to recover all photon detection events 13, 13' in the electric output signal 11 and the corresponding photon arrival times t1, t2, a plurality of sequences 18a, 18b, 18c is provided to the machine learning method 19, which is for example depicted in Fig. 1. Even more, the sequences 18a, 18b, 18c cover overlapping time intervals, i.e. they comprise partially the same consecutive discrete signal values 17 (see e.g. Fig. 1). With overlapping sequences 18a, 18b, 18c the photon arrival time t1, t2 of a specific photon detection event 13, 13' might be recovered twice as often or even more often when using two or more overlapping sequences. The resulting photon arrival times (belonging to the same detection event) can be averaged with an averaging algorithm or a weighted averaging algorithm such that a more precise determination of the photon arrival time t1, t2 of the photon detection event 13, 13' is generated. Also, higher order moments such as the variance, or other statistical values can be calculated in order to assign a confidence value to the photon arrival time that is determined several times.

While it is possible to generate a plurality of sequences 18a, 18b, 18c that are shifted in time by one discrete signal value 17 only, i.e. such that two consecutive sequences 18a, 18b, 18c would comprise fourteen identical discrete signal values (in the present example), the computational load might be too high for the machine learning method 19 to process the sequences 18a, 18b, 18c in real time or close to real time.

Moreover, the benefit of such a highly redundant calculation, namely the more accurate estimation of photon arrival times t1, t2 might not legitimate the additional computational costs.

On the other hand, there is a benefit in redundant processing of the electric output signal 11 in order to increase the accuracy of the determined photon arrival times t1, t2.

One option balancing the two goals is therefore to process each discrete signal value 17 twice, i.e. the sequences 18a, 18b, 18c overlap by 50%.

This allows for a real-time processing while sustaining a high enough accuracy in determining the photon arrival times t1, t2.

During a measurement the machine learning method 19 is therefore particularly sequentially provided with a plurality of overlapping sequences 18a, 18b, 18c that comprise consecutive and partially identical discrete signal values 17 from the filtered and sampled electric output signal.

If the photon arrival times of consecutive sequences correspond to the same photon detection event, this can be accounted for as explained above.

A recurrent neural network can be used as a machine learning method. The use of overlapping sequences 18a, 18b, 18c is then not necessary and the discrete signal values 17 from the filtered and sampled electric output signal can be fed directly to the recurrent neural network.

In the example shown in Fig. 3, outside the scope of the present invention, the machine learning method 19 comprises an artificial neural network 20 (ANN) comprising a plurality of layers Lᵢₙ ...Lₒᵤₜ , . The number of input neurons S₁...S₁₅ of the ANN 20 is identical to the number of discrete signal values 17 comprised in each sequence 18a, here fifteen.

The ANN 20 processes the sequence 18a and particularly always estimates the sets of photon arrival times T1, T2, T3 for each sequence, each set T1, T2, T3 comprising a different number of photon arrival times t1, t2, t3.

The ANN 20 is further configured to estimate the number N of photon detection events 13 13'. Depending on the determined number N of photon detection events 13, 13' in the sequence 18a, the corresponding set T1, T2, T3 comprising the same number of photon arrival times t1, t2, t3 is put out for further processing 21 as indicated by the switches 29 shown in Fig. 3.

The implementation of the ANN 20 in a suitable FPGA or DSP allows photon arrival time determination in real time.

Further processing 21 can for example comprise the determination of a decay histogram, the computation of a correlation curve, or simply the estimation of a "true" incident photon rate at the photon detector 10. The results can be displayed in real time.

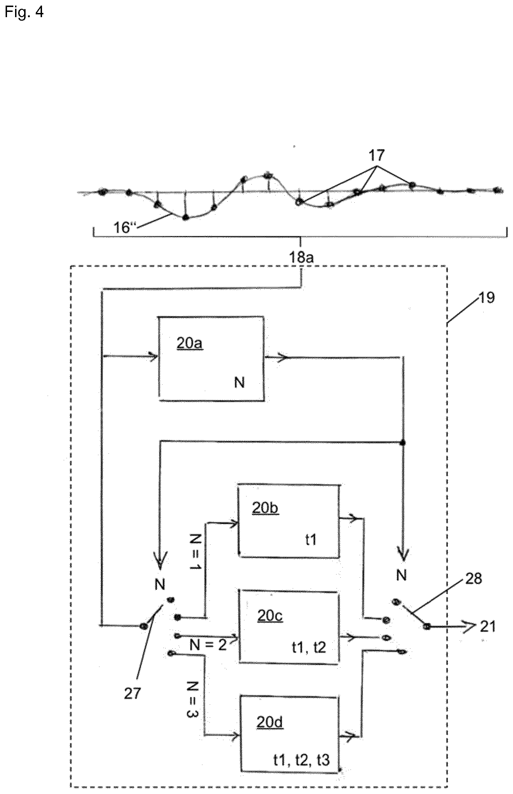

As it can be difficult to train an ANN that simultaneously estimates the number N of photon detection events 13, 13" as well as the corresponding photon arrival times t1, t2, t3 correctly, an alternative realization for the machine learning method 19 , according to the present invention, is shown in Fig 4.

In Fig. 4 the machine learning method 19 comprises a plurality of artificial neural networks ANNs 20a, 20b, 20c, 20d, wherein each ANN is trained to a specific task. The machine learning method 19 comprises a classifier ANN 20a that is trained to only estimate the number N of photon detection events 13, 13" in a sequence 18a, 18b, 18c.

The machine learning method 19 further comprises a plurality of, here three, photon arrival time estimators 20b, 20c, 20d in form of separate ANNs, wherein each estimator 20b, 20c, 20d is trained to determine a predefined number M of photon arrival times t1, t2, t3 (here, one, two or three) in a provided sequence 18a, 18b, 18c. In the example shown, the process is shown optionally as a serial or a parallel process. When the serial process is implemented, first the number N of photon detection events 13, 13' in the sequence 18a, 18b, 18c is determined by the classifier 20a and then (indicated by a switch 27 on the input side of the estimators 20b, 20c, 20d) the corresponding ANN is activated and provided with the sequence 18a, 18b, 18c in order to determine the corresponding photon arrival times t1, t2, t3. The estimated photon arrival times t1, t2, t3 and the number N of detection events are subsequently put out and provided to further processing steps 21. The serial implementation reduces computational load.

Alternatively, in the parallel implementation of the method according to the invention, the switch 27 on the input side always provides the sequences 18a, 18b, 18c to all estimators 20b, 20c, 20d such that for each sequence 18a, 18b, 18c three sets of photon arrival times t1, t2, t3 are estimated, the sets comprising either one t1, two t1, t2 or three t1, t2, t3 photon arrival times. Thus, the number N of detection events 13, 13' does not need to be known at this point in time. While the estimators 20b, 20c, 20d determine the sets photon arrival times t1, t2, t3, the classifier 20a estimates the number N of photon detection events 13, 13'. Once this is done, the estimator 20b, 20c, 20d provides the set of photon arrival times with the number N of photon arrival times as determined by the classifier 20a. The results from the other estimators 20b, 20c, 20d are discarded. The parallel implementation allows for a faster processing of the sequences 18a, 18b, 18c.

As another alternative, a pipelined process can be implemented such that quasi-parallel computing becomes possible with the suggested structure of ANNs.

## Claims

1. Method for determining photon arrival times (t1, t2) from an electric output signal (11) of a photon detector (10), the method comprising the steps of:
a) Acquiring (100) an analog electric output signal (11) from a photon detector (10), wherein the electric output signal (11) comprises signal fluctuations (12) originating from photon detection events (13);
b) Sampling (180) the electric output signal (15), such that a plurality of discrete signal values (17) is generated from the electric output signal (11, 15);
c) Determining a number (N) of photon detection events (13) and a photon arrival time (t1, t2) for each photon detection event (13) for a sequence (18a, 18b, 18c) of the discrete signal values (17) by providing the sequence (18a, 18b, 18c) of the discrete signal values (17) to a machine learning method (19) that is configured to determine the number (N) of photon detection events (13) and their associated photon arrival times (t1, t2) from the sequence (18a, 18b, 18c) of the discrete signal values (17),
d) wherein the machine learning method (19) comprises a plurality of artificial neural networks (20a, 20b, 20c, 20d),
with a classifier in form of a first artificial neural network (20a) that is configured to determine the number (N) of photon detection events (13) from the sequence (18a, 18b, 18c) of the discrete signal values (17), wherein the number (N) of photon detection events (13) is an integer non-negative number N, and
with a plurality of photon arrival time estimators (20b, 20c, 20d) in form of artificial neural networks, wherein each photon arrival time estimator (20b, 20c, 20d) is configured and trained to determine a different number (N1, N2, N3) of photon arrival times (t1, t2, t3) from the sequence (18a, 18b, 18c) of the discrete signal values (17), wherein the photon arrival time estimator (20b, 20c, 20d) that is trained for the determination of N photon arrival times (t1, t2, t3) N being the number of photon detection events determined by the classifier, is provided with the sequence (18a, 18b, 18c) of the discrete signal values (17) and determines N photon arrival times (t1, t2, t3) from the sequence (18a, 18b, 18c) of the discrete signal values (17).

2. Method according to claim 1, wherein prior step b) of claim 1, the acquired electric output signal (11) is filtered (140) with an analog filter (14), such that the filtered signal fluctuations (16) have a prolonged duration, particularly wherein the filtering (140) is a linear filtering of the electric output signal (11) and/or particularly wherein the filtering (140) comprises or is one of:
- a low-pass filtering with a low-pass filter and/or
- a resonant-filtering with a resonator, particularly wherein the resonant filtering has an impulse response of a damped oscillation.

3. Method according to one of the preceding claims, wherein the machine learning method (19) comprises at least one recurrent neural network.

4. Method according to one of the preceding claims, wherein the classifier (20a) and the photon arrival time estimator (20b, 20c, 20d) operate in parallel.

5. Method according to one of the preceding claims, wherein from the plurality of discrete signal values (17) a plurality of overlapping sequences (18a, 18b, 18c) with discrete signals values (17) is generated, wherein the number (N) of photon detection events (13) and the photon arrival time (t1, t2, t3) for each photon detection event (13) is determined for each sequence (18a, 18b, 18c) of the discrete signal values (17) by the machine learning method (19).

6. Method according to claim 5, wherein two or more photon arrival times (t1, t2, t3) that are determined by the machine learning method (19) from two or more overlapping sequences (18a, 18b, 18c) and that belong to the same photon detection event (13) are averaged, wherein the averaged photon arrival time for this photon detection event (13) is provided for further processing, particularly wherein a higher order moment such as the variance of the photon arrival times (t1, t2, t3) is provided, particularly wherein all photon arrival times (t1, t2, t3) that belong to the same detection event are provided.

7. Method according to one of the preceding claims, wherein, if the number (N) of photon detection events (13) determined from the sequence (18a, 18b, 18c) of the discrete signal values (17) is zero or greater than a predefined maximum number Nmax, a marker signal indicating that no photon arrival times are estimated for this sequence (1a, 18b, 18c) is provided.

8. Method according to one of the preceding claims, wherein the determined photon arrival times (t1, t2, t3) are provided for further processing steps (21), wherein the further processing steps (21) comprise at least one of:
- determining and particularly visualizing a characteristic value of a fluorescence signal, particularly a fluorescence intensity, a fluorescence decay histogram or a characteristic value of the fluorescence intensity or the decay histogram based on the determined photon arrival times;
- determining and particularly visualizing a fluorescence correlation curve from the photon arrival times;
- determining an inter-photon time distribution;
- calculating photon statistics for the purpose of determining a number of photon emitters such as fluorescent molecules in an observation region;
- determining photon coincidences; and/or
- determining and particularly visualizing a photon count rate at the photon detector.

9. Computer program comprising computer program code configured to execute the machine learning method according to one of the claims 1 , 3 to 8, when executed on a computer.

10. System for determining photon arrival times (t1, t2, t3) and a number (N) of photon detection events (13) from an electric output signal (11) of a photon detector (10), the system comprising at least the following components:
- a light source (22) for exciting a luminescent sample (23);
- a photon detector (10) for generating an electric output signal (11), particularly a photon-number resolving detector, connected to
- at least one analog-to-digital converter (18) for sampling (180) the electric output signal (15), such that a plurality of discrete signal values (17) is generated from the electric output signal (15), wherein the analog-to-digital converter (18) is connected to
- a processor (24) that is configured for determining a number (N) of photon detection events (13) and associated photon arrival times (t1, t2, t3) for a sequence (18a, 18b, 18c) of discrete signal values (17), wherein the processor (24) is configured to perform a machine learning method (19) that is configured to determine the number (N) of photon detection events (13) and their associated photon arrival times (t1, t2, t3) from the sequence (18a, 18b, 18c) of the discrete signal values (17) according to one of claims 1, 3 to 8.

11. System according to claim 10, wherein the system comprises a filter circuit (14) for filtering (140) the electric output signal (11) such that signal fluctuations (12) comprised in the electric output signal (11) are prolonged, particularly wherein the filter circuit (14) is arranged between the photon detector (10) and the at least one analog-to-digital converter (18).

12. System according to claim 10 or 11, wherein the light source (22) is a pulsed light source such as a pulsed laser, wherein the system comprises an electronic circuit (25) that is configured to associate the determined photon arrival time (t1, t2, t3) from the processor (24) with a preceding or a subsequent laser pulse time information, particularly wherein the system comprises a computer-readable storage medium (26) for storing the determined photon arrival time (t1, t2, t3) particularly associated with the preceding or subsequent laser pulse time information.

13. System according to one of the claims 10 to 12, wherein the system is or comprises a microscope or a spectrometer.

## Patentansprüche

1. Verfahren zur Bestimmung von Photonenankunftszeiten (t1, t2) von einem elektrischen Ausgangssignal (11) eines Photonendetektors (10), wobei das Verfahren die folgenden Schritte umfasst:
a) Erfassen (100) eines analogen elektrischen Ausgangssignals (11) von einem Photonendetektor (10), wobei das elektrische Ausgangssignal (11) Signalschwankungen (12) umfasst, die von Photonendetektionsereignissen (13) stammen;
b) Abtasten (180) des elektrischen Ausgangssignals (15), derart dass eine Vielzahl von diskreten Signalwerten (17) von dem elektrischen Ausgangssignal (11, 15) erzeugt werden;
c) Bestimmen einer Anzahl (N) von Photonendetektionsereignissen (13) und einer Photonenankunftszeit (t1, t2) für jedes Photonendetektionsereignis (13) für eine Folge (18a, 18b, 18c) der diskreten Signalwerte (17) durch Bereitstellen der Folge (18a, 18b, 18c) der diskreten Signalwerte (17) für ein Maschinenlernverfahren (19), das so ausgestaltet ist, dass es die Anzahl (N) von Photonendetektionsereignissen (13) und ihre zugehörigen Photonenankunftszeiten (t1, t2) von der Folge (18a, 18b, 18c) der diskreten Signalwerte (17) bestimmt,
d) wobei das Maschinenlernverfahren (19) eine Vielzahl von künstlichen neuronalen Netzen (20a, 20b, 20c, 20d) mit einem Klassifikator in der Form eines ersten künstlichen neuronalen Netzes (20a), das so ausgestaltet ist, dass es die Anzahl (N) von Photonendetektionsereignissen (13) von der Folge (18a, 18b, 18c) der diskreten Signalwerte (17) bestimmt, wobei die Anzahl (N) von Photonendetektionsereignissen (13) eine nicht negative Ganzzahl N ist, und mit einer Vielzahl von Photonenankunftszeit-Schätzungseinrichtungen (20b, 20c, 20d) in der Form von künstlichen neuronalen Netzwerken umfasst, wobei jede Photonenankunftszeit-Schätzungseinrichtung (20b, 20c, 20d) so ausgestaltet und trainiert ist, dass sie eine unterschiedliche Anzahl (N1, N2, N3) von Photonenankunftszeiten (t1, t2, t3) von der Folge (18a, 18b, 18c) der diskreten Signalwerte (17) bestimmt, wobei der Photonenankunftszeit-Schätzungseinrichtung (20b, 20c, 20d), die für die Bestimmung von N Photonenankunftszeiten (t1, t2, t3) trainiert ist, wobei N die Anzahl von durch den Klassifikator bestimmten Photonendetektionsereignissen ist, die Folge (18a, 18b, 18c) der diskreten Signalwerte (17) bereitgestellt wird und sie N Photonenankunftszeiten (t1, t2, t3) von der Folge (18a, 18b, 18c) der diskreten Signalwerte (17) bestimmt.

2. Verfahren nach Anspruch 1, wobei vor dem Schritt b) von Anspruch 1, das erfasste elektrische Ausgangssignal (11) mit einem Analogfilter (14) gefiltert (140) wird, derart dass die gefilterten Signalschwankungen (16) eine verlängerte Dauer aufweisen, wobei das Filtern (140) insbesondere ein lineares Filtern des elektrischen Ausgangssignals (11) ist und/oder wobei das Filtern (140) eines von Folgendem umfasst oder ist:
- ein Tiefpassfiltern mit einem Tiefpassfilter und/oder
- ein Resonanzfiltern mit einem Resonator, wobei das Resonanzfiltern insbesondere eine Impulsantwort einer gedämpften Schwingung aufweist.

3. Verfahren nach einem der vorhergehenden Ansprüche, wobei das Maschinenlernverfahren (19) mindestens ein rekurrentes neuronales Netz umfasst.

4. Verfahren nach einem der vorhergehenden Ansprüche, wobei der Klassifikator (20a) und die Photonenankunftszeit-Schätzungseinrichtung (20b, 20c, 20d) parallel betrieben werden.

5. Verfahren nach einem der vorhergehenden Ansprüche, wobei von der Vielzahl von diskreten Signalwerten (17) eine Vielzahl von sich überlappenden Folgen (18a, 18b, 18c) mit diskreten Signalwerten (17) erzeugt werden, wobei die Anzahl (N) der Photonendetektionsereignisse (13) und die Photonenankunftszeit (t1, t2, t3) für jedes Photonendetektionsereignis (13) für jede Folge (18a, 18b, 18c) der diskreten Signalwerte (17) von dem Maschinenlernverfahren (19) bestimmt werden.

6. Verfahren nach Anspruch 5, wobei zwei oder mehr Photonenankunftszeiten (t1, t2, t3), die durch das Maschinenlernverfahren (19) von zwei oder mehr sich überlappenden Folgen (18a, 18b, 18c) bestimmt werden und die zu dem gleichen Photonendetektionsereignis (13) gehören, gemittelt werden, wobei die gemittelte Photonenankunftszeit für dieses Photonendetektionsereignis (13) zur weiteren Verarbeitung bereitgestellt wird, wobei insbesondere ein Moment höherer Ordnung, wie beispielsweise die Varianz der Photonenankunftszeiten (t1, t2, t3), bereitgestellt wird, wobei insbesondere alle Photonenankunftszeiten (t1, t2, t3), die zu demselben Detektionsereignis gehören, bereitgestellt werden.

7. Verfahren nach einem der vorhergehenden Ansprüche, wobei, wenn die Anzahl (N) von Photonendetektionsereignissen (13), die von der Folge (18a, 18b, 18c) der diskreten Signalwerte (17) bestimmt werden, null oder größer als eine vordefinierte maximale Anzahl Nmax ist, ein Markierungssignal bereitgestellt wird, das angibt, dass keine Photonenankunftszeiten für diese Folge (18a, 18b, 18c) geschätzt werden.

8. Verfahren nach einem der vorhergehenden Ansprüche, wobei die bestimmten Photonenankunftszeiten (t1, t2, t3) für weitere Verarbeitungsschritte (21) bereitgestellt werden, wobei die weiteren Verarbeitungsschritte (21) mindestens eines von Folgendem umfassen:
- Bestimmen und insbesondere Sichtbarmachen eines charakteristischen Werts eines Fluoreszenzsignals, insbesondere einer Fluoreszenzstärke, eines Fluoreszenzzerfallshistogramms oder eines charakteristischen Werts der Fluoreszenzstärke oder des Zerfallshistogramms basierend auf den bestimmten Photonenankunftszeiten;
- Bestimmen und insbesondere Sichtbarmachen einer Fluoreszenzkorrelationskurve von den Photonenankunftszeiten;
- Bestimmen einer Interphotonen-Zeitverteilung;
- Berechnen von Photonenstatistiken zum Zweck der Bestimmung einer Anzahl von Photonenemittern, wie beispielsweise fluoreszierender Moleküle, in einer Beobachtungsregion;
- Bestimmen von Photonenkoinzidenzen; und/oder
- Bestimmen und insbesondere Sichtbarmachen einer Photonenzählrate an dem Photonendetektor.

9. Computerprogramm, das einen Computerprogrammcode umfasst, der so ausgestaltet ist, dass er das Maschinenlernverfahren nach einem der Ansprüche 1, 3 bis 8 ausführt, wenn er auf einem Rechner ausgeführt wird.

10. System zum Bestimmen von Photonenankunftszeiten (t1, t2, t3) und einer Anzahl (N) von Photonendetektionsereignissen (13) von einem elektrischen Ausgangssignal (11) eines Photonendetektors (10), wobei das System mindestens die folgenden Komponenten umfasst:
- eine Lichtquelle (22) zum Erregen einer lumineszierenden Probe (23);
- einen Photonendetektor (10) zum Erzeugen eines elektrischen Ausgangssignals (11), insbesondere einen Photonenanzahl auflösenden Detektor, der verbunden ist mit
- mindestens einem Analog-Digital-Wandler (18) zum Abtasten (180) des elektrischen Ausgangssignals (15), derart dass eine Vielzahl von diskreten Signalwerten (17) von dem elektrischen Ausgangssignal (15) erzeugt werden, wobei der Analog-Digital-Wandler (18) verbunden ist mit
- einem Prozessor (24), der so ausgestaltet ist, dass er eine Anzahl (N) von Photonendetektionsereignissen (13) und zugehörige Photonenankunftszeiten (t1, t2, t3) für eine Folge (18a, 18b, 18c) von diskreten Signalwerten (17) bestimmt, wobei der Prozessor (24) so ausgestaltet ist, dass er ein Maschinenlernverfahren (19) durchführt, das so ausgestaltet ist, dass es die Anzahl (N) von Photonendetektionsereignissen (13) und ihre zugehörigen Photonenankunftszeiten (t1, t2, t3) von der Folge (18a, 18b, 18c) der diskreten Signalwerte (17) nach einem der Ansprüche 1, 3 bis 8 bestimmt.

11. System nach Anspruch 10, wobei das System eine Filterschaltung (14) zum Filtern (140) des elektrischen Ausgangssignals (11) umfasst, derart dass Signalschwankungen (12), die in dem elektrischen Ausgangssignal (11) enthalten sind, verlängert werden, wobei die Filterschaltung (14) insbesondere zwischen dem Photonendetektor (10) und dem mindestens einen Analog-Digital-Wandler (18) angeordnet ist.

12. System nach Anspruch 10 oder 11, wobei die Lichtquelle (22) eine gepulste Lichtquelle, wie beispielsweise ein gepulster Laser ist, wobei das System eine elektronische Schaltung (25) umfasst, die so ausgestaltet ist, dass sie die bestimmte Photonenankunftszeit (t1, t2, t3) von dem Prozessor (24) mit vorhergehenden oder anschließenden Laserpulszeitinformationen verknüpft, wobei das System insbesondere einen maschinenlesbaren Datenträger (26) zum Speichern der bestimmten Photonenankunftszeit (t1, t2, t3) umfasst, die insbesondere mit den vorhergehenden oder anschließenden Laserpulszeitinformationen verknüpft ist.

13. System nach einem der Ansprüche 10 bis 12, wobei das System ein Mikroskop oder ein Spektrometer umfasst oder ist.

## Revendications

1. Procédé de détermination de temps d'arrivée de photons (t1, t2) à partir d'un signal de sortie électrique (11) d'un détecteur de photons (10), le procédé comportant les étapes de :
a) Acquisition (100) d'un signal de sortie électrique analogique (11) à partir d'un détecteur de photons (10), dans lequel le signal de sortie électrique (11) comporte des fluctuations de signaux (12) provenant d'événements de détection de photons (13) ;
b) Échantillonnage (180) du signal de sortie électrique (15), de sorte qu'une pluralité de valeurs de signaux discrètes (17) soient générées à partir du signal de sortie électrique (11, 15) ;
c) Détermination d'un nombre (N) d'événements de détection de photons (13) et d'un temps d'arrivée de photons (t1, t2) pour chaque événement de détection de photons (13) pour une séquence (18a, 18b, 18c) des valeurs de signaux discrètes (17) par fourniture de la séquence (18a, 18b, 18c) des valeurs de signaux discrètes (17) à un procédé d'apprentissage machine (19) qui est configuré pour déterminer le nombre (N) d'événements de détection de photons (13) et leurs temps d'arrivée de photons (t1, t2) associés à partir de la séquence (18a, 18b, 18c) des valeurs de signaux discrètes (17),
d) dans lequel le procédé d'apprentissage machine (19) comporte une pluralité de réseaux neuronaux artificiels (20a, 20b, 20c, 20d),
avec un classificateur sous la forme d'un premier réseau neuronal artificiel (20a) qui est configuré pour déterminer le nombre (N) d'événements de détection de photons (13) à partir de la séquence (18a, 18b, 18c) des valeurs de signaux discrètes (17), dans lequel le nombre (N) d'événements de détection de photons (13) est un nombre entier non négatif N et
avec une pluralité d'estimateurs de temps d'arrivée de photons (20b, 20c, 20d) sous forme de réseaux neuronaux artificiels, dans lequel
chaque estimateur de temps d'arrivée de photons (20b, 20c, 20d) est configuré et entraîné pour déterminer un nombre (N1, N2, N3) différent de temps d'arrivée de photons (t1, t2, t3) à partir de la séquence (18a, 18b, 18c) des valeurs des signaux discrètes (17), dans lequel l'estimateur de temps d'arrivée de photons (20b, 20c, 20d) qui est entraîné pour la détermination de N temps d'arrivée de photons (t1, t2, t3), N étant le nombre d'événements de détection de photons déterminé par le classificateur, est doté de la séquence (18a, 18b, 18c) des valeurs de signaux discrètes (17) et détermine N temps d'arrivée de photons (t1, t2, t3) à partir de la séquence (18a, 18b, 18c) des valeurs de signaux discrètes (17).

2. Procédé selon la revendication 1, dans lequel, avant l'étape b) de la revendication 1, le signal de sortie électrique (11) acquis est filtré (140) avec un filtre analogique (14), de sorte que les fluctuations de signaux filtrés (16) aient une durée prolongée, en particulier dans lequel le filtrage (140) est un filtrage linéaire du signal de sortie électrique (11) et/ou particulièrement dans lequel le filtrage (140) comporte ou est l'un parmi :
- un filtrage passe-bas avec un filtre passe-bas et/ou
- un filtrage résonnant avec un résonateur, en particulier dans lequel le filtrage résonnant a une réponse d'impulsion d'une oscillation atténuée.

3. Procédé selon l'une des revendications précédentes, dans lequel le procédé d'apprentissage machine (19) comporte au moins un réseau neuronal récurrent.

4. Procédé selon l'une des revendications précédentes, dans lequel le classificateur (20a) et l'estimateur de temps d'arrivée des photons (20b, 20c, 20d) fonctionnent en parallèle.

5. Procédé selon l'une des revendications précédentes, dans lequel, parmi la pluralité de valeurs de signaux discrètes (17), une pluralité de séquences en chevauchement (18a, 18b, 18c) avec des valeurs de signaux discrètes (17) est générée, dans lequel le nombre (N) d'événements de détection de photons (13) et le temps d'arrivée de photons (t1, t2, t3) pour chaque événement de détection de photons (13) sont déterminés pour chaque séquence (18a, 18b, 18c) des valeurs de signaux discrètes (17) par le procédé d'apprentissage machine (19).

6. Procédé selon la revendication 5, dans lequel deux temps d'arrivée de photons (t1, t2, t3) ou plus qui sont déterminés par le procédé d'apprentissage machine (19) à partir de deux séquences en chevauchement (18a, 18b, 18c) ou plus et qui appartiennent au même événement de détection de photons (13) sont pondérés, dans lequel le temps d'arrivée de photons pondéré pour cet événement de détection de photons (13) est prévu pour un traitement ultérieur, en particulier dans lequel un moment d'ordre supérieur, comme la variance des temps d'arrivée de photons (t1, t2, t3), est prévu, en particulier dans lequel tous les temps d'arrivée de photons (t1, t2, t3) qui appartiennent au même événement de détection sont prévus.

7. Procédé selon l'une des revendications précédentes, dans lequel, si le nombre (N) d'événements de détection de photons (13) déterminé à partir de la séquence (18a, 18b, 18c) des valeurs de signaux discrètes (17) est nul ou supérieur à un nombre maximum prédéfini Nmax, un signal de marqueur indiquant qu'aucun temps d'arrivée de photons n'est estimé pour cette séquence (18a, 18b, 18c) est prévu.

8. Procédé selon l'une des revendications précédentes, dans lequel les temps d'arrivée de photons (t1, t2, t3) déterminés sont prévus pour des étapes de traitement (21) ultérieures, dans lequel les étapes de traitement (21) ultérieures comportent au moins un élément parmi :
- la détermination et, en particulier, la visualisation d'une valeur caractéristique d'un signal de fluorescence, en particulier une intensité de fluorescence, un histogramme de décomposition de fluorescence ou une valeur caractéristique de l'intensité de fluorescence ou de l'histogramme de décomposition sur la base des temps d'arrivée de photons déterminés ;
- la détermination et, en particulier, la visualisation d'une courbe de corrélation de fluorescence à partir des temps d'arrivée de photons ;
- la détermination d'une répartition temporelle entre photons ;
- le calcul de statistiques de photons dans le but de déterminer un nombre d'émetteurs de photons, comme des molécules fluorescentes, dans une région d'observation ;
- la détermination de coïncidences de photons ; et/ou
- la détermination et, en particulier, la visualisation d'un taux de comptage de photons au niveau du détecteur de photons.

9. Programme informatique comportant un code de programme informatique configuré pour exécuter le procédé d'apprentissage machine selon l'une des revendications 1 et 3 à 8, lorsqu'il est exécuté sur un ordinateur.

10. Système pour déterminer des temps d'arrivée de photons (t1, t2, t3) et un nombre (N) d'événements de détection de photons (13) à partir d'un signal de sortie électrique (11) d'un détecteur de photons (10), le système comportant au moins les composants suivants :
- une source de lumière (22) pour exciter un échantillon luminescent (23) ;
- un détecteur de photons (10) pour générer un signal de sortie électrique (11), en particulier un détecteur de résolution de nombre de photons, connecté à
- au moins un convertisseur analogique à numérique (18) pour échantillonner (180) le signal de sortie électrique (15), de sorte qu'une pluralité de valeurs de signaux discrètes (17) soit générée à partir du signal de sortie électrique (15), dans lequel le convertisseur analogique à numérique (18) est connecté à
- un processeur (24) qui est configuré pour déterminer un nombre (N) d'événements de détection de photons (13) et des temps d'arrivée de photons (t1, t2, t3) associés pour une séquence (18a, 18b, 18c) de valeurs de signaux discrètes (17), dans lequel le processeur (24) est configuré pour réaliser un procédé d'apprentissage machine (19) qui est configuré pour déterminer le nombre (N) d'événements de détection de photons (13) et leurs temps d'arrivée de photons (t1, t2, t3) associés à partir de la séquence (18a, 18b, 18c) des valeurs de signaux discrètes (17) selon l'une des revendications 1 et 3 à 8.

11. Système selon la revendication 10, dans lequel le système comporte un circuit de filtre (14) pour filtrer (140) le signal de sortie électrique (11), de sorte que des fluctuations de signaux (12) comprises dans le signal de sortie électrique (11) soient prolongées, en particulier dans lequel le circuit de filtre (14) est agencé entre le détecteur de photons (10) et le au moins un convertisseur analogique à numérique (18).

12. Système selon la revendication 10 ou 11, dans lequel la source de lumière (22) est une source de lumière puisée, comme un laser pulsé, dans lequel le système comporte un circuit électronique (25) qui est configuré pour associer le temps d'arrivée de photons (t1, t2, t3) déterminé à partir du processeur (24) à des informations de temps d'impulsion laser précédentes ou ultérieures, en particulier dans lequel le système comporte un support de stockage lisible par ordinateur (26) pour stocker le temps d'arrivée de photons (t1, t2, t3) déterminé particulièrement associé aux informations de temps d'impulsions laser précédentes ou ultérieures.

13. Système selon l'une des revendications 10 à 12, dans lequel le système est ou comporte un microscope ou un spectromètre.
